# EUROPÄISCHE PATENTANMELDUNG

(11) **EP 1 775 564 A1**
(43) Veröffentlichungstag der Anmeldung: **18.04.2007**
(21) Anmeldenummer: 06122122.2
(22) Anmeldetag: 11.10.2006
(51) Int. Cl.: G01J 1/42, G01J 1/04

(54) **Messanordnung und Verfahren zum Messen des Fernfeldes einer Lichtquelle**

(30) Priorität: 11.10.2005 DE 102005048685
(71) Anmelder: Schuh & Co. GmbH, 82110 Germering (DE)
(72) Erfinder: Blendowske, Ralf, Prof. Dr, 64295 Darmstadt (DE); Breuer, Stefan, 63739 Aschaffenburg (DE); Etzel, Matthias, 64331 Weiterstadt (DE); Friehl, Frank, 64560 Riedstadt (DE); Häberle, Udo, 67551 Worms (DE); Heddrich, Wolfgang, Prof. Dr., 64839 Münster (DE); Jarschel, Gerald, 63329 Egelsbach (DE); Vetter, Katja, 12391 Dresden (DE); Heer, Rainer, 82041 Oberhaching (DE); Schuh, Günther, 82178 Puchheim (DE)
(74) Vertreter: Strych, Werner Maximilian Josef

(57) **Zusammenfassung**

Es wird eine Messanordnung zum Messen des Fernfeldes einer Lichtquelle beschrieben, die die zu vermessende Lichtquelle (2), eine Sammeloptik (3) mit einer vorgegebenen Brennweite (8) zum Sammeln des von der Lichtquelle ausgesendeten Lichts, eine Querschnittserfassungseinrichtung (4) zum Erfassen des Querschnitts des von der Sammeloptik gesammelten Lichts in einer Erfassungsebene und eine photosensorische Detektionseinrichtung (9) zum Detektieren des von der Querschnittserfassungseinrichtung erfassten Lichtquerschnitts aufweist, wobei die Querschnittserfassungseinrichtung mit einem Abstand von der Sammeloptik angeordnet ist, welcher der Brennweite entspricht. Diese Messanordnung ermöglicht eine möglichst hohe Auflösung des gemessenen Fernfeldes und eine präzise Erfassung der Lichtstärke.

## Beschreibung

### I. Anwendungsgebiet

Die vorliegende Erfindung betrifft eine Messanordnung und ein Verfahren zum Messen bzw. Charakterisieren des optischen Fernfeldes einer Lichtquelle sowie die Verwendung der Messanordnung zum Messen bzw. Charakterisieren des Fernfeldes von Flughafenleuchtfeuern, insbesondere Flughafenunter- und -überflurfeuern.

### II. Technischer Hintergrund

Aus der DE 102 07 820 A1 sind bereits eine Vorrichtung und ein Verfahren zur qualitativen und quantitativen Lichtmessung der Leuchtfeuer auf Start- bzw. Landebahnen sowie Rollwegen von Flughäfen bekannt. Die Vorrichtung dient der mobilen Bestimmung photometrischer Größen der Lampen von Flugplatzbefeuerungen. Hierbei wird der Lichtkegel der Lampe einer Flugplatzbefeuerung auf einer Projektionsfläche aufgefangen, mittels einer Kamera ein Bild der Projektionsfläche erfasst, das von der Kamera erfasste Bild in digitaler Form einer Recheneinrichtung zugeführt und schließlich mit Hilfe der Recheneinrichtung anhand wenigstens eines Vergleichs mit wenigstens einem in digitaler Form vorliegenden Referenzbild ausgewertet.

Aus der EP 1 366 989 A1 sind ein weiteres Verfahren bzw. eine weitere Vorrichtung zur Überprüfung von Leuchtmitteln und Lichtsignalen auf Flughäfen bekannt.

Bei der mit einem Fahrzeug verbindbaren Vorrichtung ist zwischen einer Messeinrichtung mit einer Vielzahl lichtempfindlicher Sensorelemente und dem zu überprüfenden Leuchtmittel eine transluzente Streuscheibe angeordnet, auf der ein Bild eines Lichtkegelschnittes des Leuchtmittels entsteht. Das auf der Streuscheibe entstehende Bild wird zur Erzeugung eines Ausgangssignals auf die Vielzahl lichtempfindlicher Sensorelemente abgebildet. Das Ausgangssignal wird schließlich zum Zwecke der Auswertung ausgelesen.

Die beiden voranstehend diskutierten Vorrichtungen bzw. Verfahren messen bzw. charakterisieren lichtquellennahe Lichtverteilungen, da die Projektionsfläche bzw. die Streuscheibe stets relativ nahe an der zu messenden Lichtquelle angeordnet werden. Dies ist nachteilig, da gemäß internationaler Richtlinien und Empfehlungen Lichtquellen auf Flughäfen in einem verhältnismäßig großen Abstand zu messen bzw. zu charakterisieren sind, beispielsweise in einer Entfernung von ca. 20 m. Das in nicht lichtquellennahen Entfernungen von der Lichtquelle vorhandene Feld wird als so genanntes Fernfeld der Lichtquelle bezeichnet. Die beiden voranstehend diskutierten Vorrichtungen bzw. Verfahren ermöglichen es nicht, mittels einer kompakten Messanordnung das Fernfeld fremdlichtfrei zu messen bzw. zu charakterisieren.

Aus dem Bereich der Scheinwerfereinstellung bei Kraftfahrzeugen ist ein von der VisiCon Automatisierungstechnik GmbH vertriebenes Scheinwerfereinstellsystem mit der Bezeichnung "AUDIT" bekannt. Bei diesem System findet ein Lichtsammelkasten mit CCD-Kamera und Fresnellinse Anwendung. Die Fresnellinse dient dazu, den vorgeschriebenen Prüfabstand für die Scheinwerfer der Kraftfahrzeuge von ca. 10 Metern zu verringern. Daher befindet sich der Schirm, auf den das Lichtfeld des zu prüfenden Scheinwerfers projiziert wird, nicht in einem der Brennpunkte der Fresnellinse, sondern etwas davor oder dahinter. Hierdurch wird es ermöglicht, in einem wesentlich geringeren Abstand als 10 m das dort vorhandene Lichtfeld des Scheinwerfers zu sehen und die Lage der Hell-Dunkel-Grenze zu beurteilen.

In der praktischen Anwendung des bekannten Scheinwerfereinstellsystems "AUDIT" wird der Scheinwerfer so nah wie möglich an die Fresnellinse herangeführt, um zu vermeiden, dass die Randbereiche des Lichtkegels abgeschnitten und dadurch nicht mittels der Fresnellinse auf den Schirm abgebildet werden. Photometrische Größen werden im Rahmen der Scheinwerfereinstellung nicht gemessen.

Die bekannten Vorrichtungen verwenden als Projektionsfläche zum Auffangen des von der Lichtquelle ausgesendeten Lichts eine Mattscheibe bzw. eine transluzente Streuscheibe. Derartige Scheiben weisen den Nachteil auf, dass bei Lichtquellen in Form von Blitzlampen Überbelichtungen des Detektionssystems auftreten können.

### III. Darstellung der Erfindung

### a) Technische Aufgabe

Es ist daher die Aufgabe der vorliegenden Erfindung, eine Messanordnung sowie ein Verfahren zum präzisen Messen des Fernfeldes einer Lichtquelle, insbesondere eines Flughafenleuchtfeuers, zu schaffen, bei der bzw. dem eine möglichst hohe Auflösung des gemessenen Fernfeldes, insbesondere der Lichtstärke, erreicht werden kann. Eine weitere Aufgabe der vorliegenden Erfindung besteht darin, eine Messanordnung und ein Verfahren zum Messen des Fernfeldes einer Lichtquelle, insbesondere eines Flughafenleuchtfeuers, zu schaffen, bei der bzw. dem die Nachteile der Streuscheiben vermieden werden.

### b) Lösung der Aufgabe

Diese Aufgaben werden mit einer Messanordnung bzw. mit einem Verfahren mit den Merkmalen der Ansprüche 1 bzw. 19 gelöst. Weitere Ausgestaltungen der vorliegenden Erfindung ergeben sich aus den Unteransprüchen.

Erfindungsgemäß wird die Querschnittserfassungseinrichtung mit einem Abstand von der Sammeloptik angeordnet ist, welcher deren Brennweite entspricht. Erfindungsgemäß wird die Lichtquelle, insbesondere das Flughafenleuchtfeuer, außerdem mit einem Abstand von der Sammeloptik angeordnet, der im Wesentlichen deren Brennweite entspricht. Dadurch wird der Vorteil erreicht, dass die gesammelten Lichtstrahlen im Wesentlichen senkrecht auf die Erfassungsebene auftreffen, so dass das dort erfasste Bild des Lichtquerschnitts wegen des definierten Lichteinfalles eine für die Zwecke der Charakterisierung der Lichtquelle, insbesondere der Messung der Lichtstärke, gute Qualität aufweist. Das mittels der Querschnittserfassungseinrichtung aufgefangene Licht der Lichtquelle erlaubt eine gute Messgenauigkeit für photometrische Größen. Vorteilhaft ist desweiteren, dass sich bei dieser Form der Strahltransformation eine bessere Farbtreue ergibt.

Erfindungsgemäß wird desweiteren das Licht der Lichtquelle mit Hilfe einer Sammeloptik derart transformiert, dass im Abstand der bildseitigen Brennweite der Sammeloptik, d.h. in der Erfassungs- bzw. Fourierebene, eine Lichtverteilung entsteht, die der sogenannten Fraunhoferbeugung entspricht. Deren Lichtstärkeverteilung entspricht überraschenderweise genau derjenigen der Fraunhoferbeugung, wenn das gesamte Licht der Lichtquelle von der Sammeloptik erfasst wird. Die Lichtverteilung wird mittels einer Querschnittserfassungseinrichtung sichtbar gemacht, die in der Erfassungs- bzw. Fourierebene, d.h. im Abstand der Brennweite von der Sammeloptik, angeordnet wird. Durch diese Art der Anordnung der Querschnittserfassungseinrichtung kann auch der so genannte Fernfeldwinkel der Fraunhoferbeugung erfasst werden.

Unabhängig davon, ob sich die Lichtquelle im Abstand der Brennweite der Sammeloptik von der Sammeloptik befindet oder nicht, schlägt die vorliegende Erfindung desweiteren vor, die bei bekannten Systemen als Querschnittserfassungseinrichtung verwendete Matt- bzw. Streuscheibe durch andere Querschnittserfassungseinrichtungen zu ersetzen.

Besonders vorteilhaft ist es, in der Fourierebene eine orts- und/oder spektralauflösende Detektoranordnung vorzusehen, die auch als Detektorarray bezeichnet wird. Bei dem Detektorarray kann es sich beispielsweise um ein RGB-Detektorarray oder um ein Fotodiodenarray handeln. Ein Detektorarray dieser Art vereint die Funktionen der Querschnittserfassungseinrichtung einerseits und der photosensorischen Detektionseinrichtung andererseits. Bei Anordnung des Detektorarrays in der Fourierebene ist es daher in vorteilhafter Weise nicht erforderlich, eine separate photosensorische Detektionseinrichtung, wie beispielsweise eine Kamera, vorzusehen. Die Ausgangssignale des Detektorarrays können zum Zwecke ihrer Auswertung direkt einer elektronischen Datenverarbeitungsanlage, wie beispielsweise einem PC oder einem Laptop, zugeführt werden. Ein weiterer Vorteil besteht darin, dass sich eine verkürzte und kompaktere Bauweise der Messanordnung ergibt.

Erfindungsgemäß kann als Querschnittserfassungseinrichtung auch eine Lochplattenanordnung verwendet werden, bei der zwei Lochplatten derart voneinander beabstandet angeordnet sind, dass die Materialflächen der einen Lochplatte die gegenüberliegenden Löcher der anderen Lochplatte verdecken. Nur Licht, das mehrfach zwischen den beiden Lochplatten reflektiert wird, tritt aus den Löchern wieder aus und kann mittels einer orts- und/oder spektralauflösenden, photosensorischen Detektionseinrichtung detektiert werden. Vorteilhaft hierbei ist, dass hohe Lichtstärken von den Detektorflächen der Detektionseinrichtung ferngehalten werden.

Erfindungsgemäß wird desweiteren vorgeschlagen, als Querschnittserfassungseinrichtung eine aus Lichtleitfasern bestehende Faseranordnung zu wählen, die auch als Faserarray bezeichnet wird. Dabei liegen die Eintrittsenden der Lichtleitfasern in der Fourierebene der Sammeloptik und im Wege einer Querschnittswandlung, die mittels verhältnismäßig kleiner optischer Komponenten wie Kameraobjektiv und Linsen möglich ist, kann die in der Fourierebene herrschende Lichtstärke an den Ausgangsenden der Lichtleitfasern mit Hilfe der photosensorischen Detektionseinrichtung detektiert werden. Dies bringt den Vorteil mit sich, dass die orts- und /oder spektralauflösende, photosensorische Detektionseinrichtung relativ zu der Fourierebene in beliebiger räumlicher Ausrichtung und Anordnung positioniert werden kann, so dass es möglich ist, die erfindungsgemäße Messanordnung besonders kompakt zu bauen.

Erfindungsgemäß kann es sich bei der Querschnittserfassungseinrichtung auch um eine flexible Folie oder um einen flexiblen Stoff bzw. ein flexibles Gewebe handeln, die bzw. der bzw. das beispielsweise mit Hilfe eines Spannrahmens derart aufgespannt werden kann, dass sich eine ebene Fläche ergibt, die in der Erfassungsebene zu liegen kommt. Bei Bedarf kann die Folie, der Stoff bzw. das Gewebe mehrlagig ausgebildet sein. Vorteilhaft bei dieser Art der Querschnittserfassungseinrichtung ist deren Bruchsicherheit sowohl bei ihrer Montage als auch während des Betriebs der Messanordnung. Darüber hinaus sind im Vergleich zu starren Querschnittserfassungseinrichtungen sehr kleine Montageöffnungen in dem Gehäuse der Messanordnung realisierbar, wenn das Aufspannen erst im Gehäuse erfolgt.

Die photosensorische Detektionseinrichtung, bei der es sich vorzugsweise um eine orts- und/oder spektralauflösende Kamera, insbesondere eine Farbkamera, handelt, oder die erfindungsgemäße Detektoranordnung liefert ein dem gesammelten Lichtquerschnitt entsprechendes Ausgangssignal, das von einem Datenverarbeitungssystem, vorzugsweise einem Computer, erfasst, aufbereitet, ausgewertet und dargestellt werden kann. Nach der Aufbereitung kann die Fernfeldverteilung lichtstärkegetreu dargestellt werden. Darüber hinaus ist es möglich, das Ausgangssignal und die aufbereitete Fernfeldverteilung mit vorgegebenen Lichtstärken zu vergleichen und dadurch eine Qualitätsbeurteilung der Lichtquelle durchzuführen.

Vorzugsweise wird das in dem Datenverarbeitungssystem abgelegte Ausgangssignal so aufbereitet, dass eine ortsaufgelöste farbmetrische Analyse der Lichtquelle möglich ist. Der dabei gewonnene, ortsaufgelöste, farbmetrische Datensatz kann dann mit vorgegebenen farbmetrischen Datensätzen verglichen werden, so dass zusätzlich eine farbmetrische Qualitätsbeurteilung der Lichtquelle durchgeführt werden kann. In vorteilhafter Weise kann der ortsaufgelöste, farbmetrische Datensatz zur Analyse von Fehlern in und an der Lichtquelle herangezogen werden, so dass Lichtquellen, insbesondere Flughafenleuchtfeuer, mit Verschmutzungen, Kratzern in optischen Oberflächen, Eintrübungen und ähnlichem identifiziert werden können.

Die erfindungsgemäße Messanordnung sowie das erfindungsgemäße Verfahren können insbesondere in Zusammenhang mit der Vermessung von Flughafenleuchtfeuern in einem stationären Betrieb oder in einem mobilen Betrieb eingesetzt werden. Der stationäre Betrieb kann beispielsweise in Labors, Werkstätten sowie Einrichtungen der Qualitätssicherung und der Flugsicherheitsüberwachung stattfinden. Die erfindungsgemäße Messanordnung kann in diesem Fall in einem stationären Gehäuse angeordnet werden. Der mobile Betrieb kann mit Hilfe eines Fahrzeuges stattfinden, mit dessen Hilfe die erfindungsgemäße Messanordnung über die Flughafenleuchtfeuer bewegt bzw. gefahren werden kann. Auf diese Weise ist für die Reparaturmannschaft, Qualitätssicherung und Flugsicherheitsüberwachung eine in Vivo Analyse im Flughafenvorfeld sowie an den Rollbahnen möglich.

Unabhängig davon, welche Art von Querschnittserfassungseinrichtung verwendet und wie groß der Abstand zwischen Lichtquelle und Sammeloptik gewählt wird, schlägt die vorliegende Erfindung vor, die Lichtstärkeverteilung des Fernfeldes der Lichtquelle quantitativ zu vermessen und zudem vorzugsweise simultan mittels einer farbmetrischen Analyse auf einer Darstellungseinheit, beispielsweise einem Bildschirm, darzustellen. Die farbmetrische Analyse kann besonders vorteilhaft mit RGB-Detektorsystemen, z. B. RGB-Kameras, durchgeführt werden. Die farbmetrische Analyse bringt den in Zusammenhang mit der Charakterisierung eines Fernfeldes bislang nicht bekannten Vorteil mit sich, dass simultan die Lichtstärkeverteilung im Fernfeld der Lichtquelle sowie Farbkoordinaten in dargestellten Farbräumen analysiert werden können. Zudem bringt die farbmetrische Analyse den Vorteil, simultan zu den quantitativen Messergebnissen Fehlermerkmale der Lichtquelle oder ihrer Leuchtmittel zu entdecken und zu identifizieren. Simultan in vorgenanntem Sinne soll bedeuten, dass die gemessene Lichtstärkeverteilung des Fernfeldes einerseits und die Ergebnisse der farbmetrischen Analyse, d.h. die ermittelten Farbkoordinaten des Fernfeldes, andererseits gleichzeitig auf der Darstellungseinheit betrachtbar sind. Ein gleichzeitiges Erscheinen der Lichtstärkeverteilung und der Farbkoordinaten auf der Darstellungseinheit ist damit nicht zwingend verbunden.

### c) Ausführungsbeispiele

Nachfolgend werden mehrere Ausführungsformen der vorliegenden Erfindung beispielhaft anhand der beigefügten Zeichnungen beschrieben. Es zeigen:
- Fig. 1:: eine schematische Darstellung einer ersten Ausführungsform der vorliegenden Erfindung mit einer Mattscheibe;
- Fig. 2:: eine schematische Darstellung einer zweiten Ausführungsform der vorliegenden Erfindung mit einem Diodenarray;
- Fig. 3:: eine schematische Darstellung einer dritten Ausführungsform der vorliegenden Erfindung mit einer Lochplattenanordnung; und
- Fig. 4:: eine schematische Darstellung einer vierten Ausführungsform der vorliegenden Erfindung mit einem Faserarray.

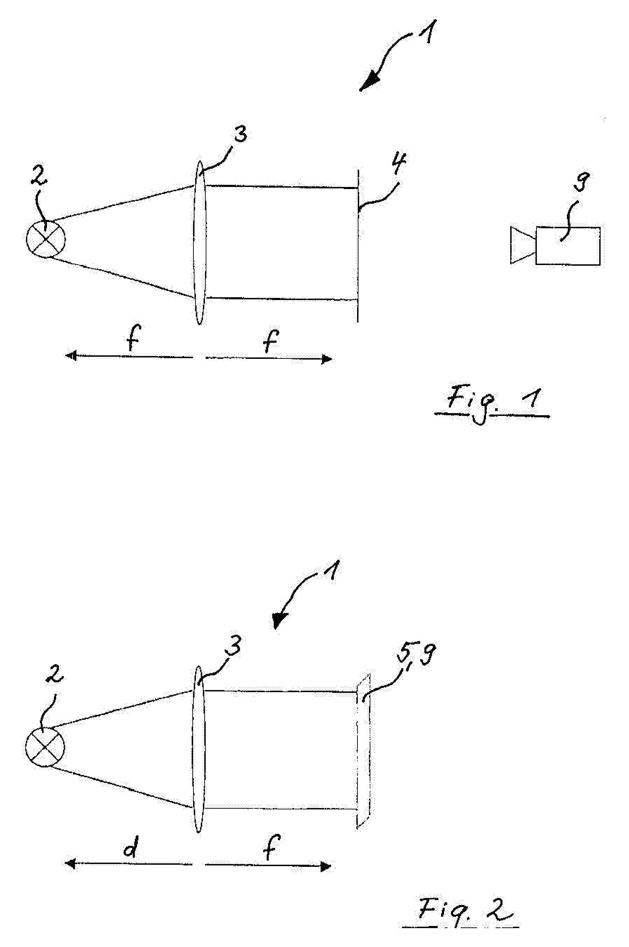

In den Fig. 1 bis 4 ist schematisch eine Lichtquelle 2 dargestellt, bei der es sich um ein Flughafenleuchtfeuer beliebiger Art handeln kann. Denkbar sind beispielsweise Flughafenleuchtfeuer in Form von Unter- oder Überflurleuchtfeuern für Start- und Landebahnen. Die vorliegende Erfindung ist jedoch auch in Zusammenhang mit der Charakterisierung beliebiger andersartiger Lichtquellen verwendbar, wie etwa bei Unterflurleuchten in von Kraftfahrzeugen befahrenen Straßen oder sonstigen Fahrbahnen oder wie etwa bei Signalleuchten aller Art, insbesondere Signalanlagen bzw. Ampeln im Straßenverkehr.

Fig. 1 zeigt eine erfindungsgemäße Messanordnung 1 mit einem als Lichtquelle 2 fungierenden Flughafenleuchtfeuer, einer Sammellinse 3, bei der es sich vorzugsweise um eine Fresnellinse handelt, einer transluzenten Mattscheibe 4 und einer Kamera 9, bei der es sich vorzugsweise um eine orts- und spektralauflösende Farbkamera handelt. Die Mattscheibe 4 fungiert als Querschnittserfassungseinrichtung und die Kamera 9 fungiert als photosensorische Detektionseinrichtung im Sinne der vorliegenden Erfindung. Die Sammellinse 3 weist eine Brennweite f auf, beispielsweise f = 36 cm.

Wie in Fig. 1 zu erkennen ist, befindet sich die Mattscheibe 4 in einem Abstand von der Sammellinse 3, der deren Brennweite f entspricht. Die Ebene der Mattscheibe 4 bildet dementsprechend die Erfassungsebene im Sinne der vorliegenden Erfindung und verläuft parallel zu der Mittelebene der Sammellinse 3. Die Lichtquelle 2 ist auf der von der Mattscheibe 4 abgewandten Seite der Sammellinse 3 angeordnet. Auch die Lichtquelle 2 befindet sich in einem Abstand von der Sammellinse 3, welcher der Brennweite f der Sammellinse 3 entspricht. Aufgrund der Anordnung der Lichtquelle 2 in dem Brennweitenabstand f wird auf der Mattscheibe 4 ein besonders hoch aufgelöstes Bild der Lichtverteilung des von der Sammellinse 3 abgebildeten Lichts erzeugt. Diese Lichtverteilung kann mit Hilfe der Kamera 9, die auf der der Sammellinse 3 abgewandten Seite der Mattscheibe 4 angeordnet ist, detektiert und von dieser schließlich einer elektronischen Datenverarbeitung zugeführt werden. Die Kamera 9 kann alternativ auf derselben Seite der Mattscheibe 4 wie die Sammellinse 3 angeordnet werden. In diesem Fall wird vorzugsweise eine opake, streuende Mattscheibe 4 verwendet.

Die Fig. 2 bis 4 zeigen Ausführungsformen der vorliegenden Erfindung, bei denen gleiche Bezugszeichen die gleichen Teile kennzeichnen wie bei der ersten Ausführungsform gemäß Fig. 1. Im Gegensatz zu der Ausführungsform gemäß Fig. 1 kann der Abstand d zwischen der Lichtquelle 2 und der Sammellinse 3 gleich der Brennweite f der Sammellinse 3 sein, muss jedoch nicht zwingend derart gewählt werden. Der Abstand d kann nach Bedarf und/oder in Abhängigkeit von den räumlichen Randbedingungen beliebig gewählt werden. Wenn bei den Ausführungsformen gemäß der Fig. 2 bis 4 der Abstand d = f gewählt wird, so ergibt sich dieselbe vorteilhafte Wirkung wie in Zusammenhang mit der Ausführungsform gemäß Fig. 1, nämlich ein hoch aufgelöstes Bild in der Erfassungs- bzw. Fourierebene.

Fig. 2 zeigt eine erfindungsgemäße Messanordnung 1, bei der in dem Brennweitenabstand f von der Sammellinse 3 eine Detektoranordnung in Form eines Dioden- bzw. Photodiodenarrays 5 angeordnet ist. Das Diodenarray kann beispielsweise eine Diodenanzahl im Bereich von 30 x 30 bis 500 x 500 Photodioden aufweisen. Auch Rechteckanordnungen mit bis zu 500 x 400 Dioden sind denkbar. Wie in Fig. 2 zu erkennen ist, erübrigt sich bei dieser Ausführungsform eine separate Detektionseinrichtung in Form einer Kamera oder ähnlichem, da das Diodenarray 5 gleichzeitig die Funktion der Querschnittserfassungseinrichtung und der Detektionseinrichtung übernimmt. Die Querschnittserfassung und die Detektion erfolgen somit mittels einer einzigen Baueinheit in Form des Diodenarrays 5. Ein Computer, wie beispielsweise ein PC oder ein Laptop, kann zum Zwecke der elektronischen Datenverarbeitung unmittelbar an das Diodenarray 5 angeschlossen werden.

Fig. 3 zeigt eine dritte Ausführungsform einer erfindungsgemäßen Messanordnung 1, bei der in der Erfassungs- bzw. Fourierebene eine Querschnittserfassungseinrichtung in Form einer Lochplattenanordnung 6 angeordnet ist. Die Lochplattenanordnung 6 besteht vorzugsweise aus zwei aus Blech hergestellten Lochplatten 10, 11, die voneinander beabstandet sowie parallel zueinander verlaufend angeordnet sind. Als Bezugsebene für die Messung des Brennweitenabstandes f von der Mittelebene der Sammellinse 3 dient die der Sammellinse 3 zugewandte, perforierte Fläche der Lochplattenanordnung 6, d.h. die Ebene der in Fig. 3 linken Oberfläche der Lochplatte 10.

Die beiden Lochplatten 10, 11 sind in einer Richtung parallel zu der Erfassungs- bzw. Fourierebene derart zueinander versetzt, dass die geschlossenen Blechflächen der Lochplatte 10 die gegenüberliegenden Löcher in der Lochplatte 11 verdecken und umgekehrt. Mit anderen Worten: Die Löcher in den Lochplatten 10 und 11 fluchten nicht nur nicht miteinander, sondern sind derart gegeneinander versetzt, dass kein Lichtstrahl die Lochplattenanordnung 6 geradlinig durchdringen kann. Das Licht wird vielmehr zwischen den beiden Lochplatten 10, 11 reflektiert, tritt schließlich aus den Löchern der Lochplatte 11 aus und kann von der in Fig. 3 gezeigten orts- und ggf. spektralauflösenden Kamera 9 detektiert werden. Der Lochabstand von Mittelpunkt zu Mittelpunkt der vorzugsweise kreisförmigen Löcher der beiden Lochplatten 10, 11 liegt vorzugsweise im Bereich von 0,1 bis 10 mm, der Lochdurchmesser der Löcher beider Lochplatten 10, 11 liegt vorzugsweise im Bereich von 0,03 bis 3 mm und der Abstand der beiden Lochplatten 10, 11 voneinander liegt vorzugsweise im Bereich von 0,1 bis 10 mm.

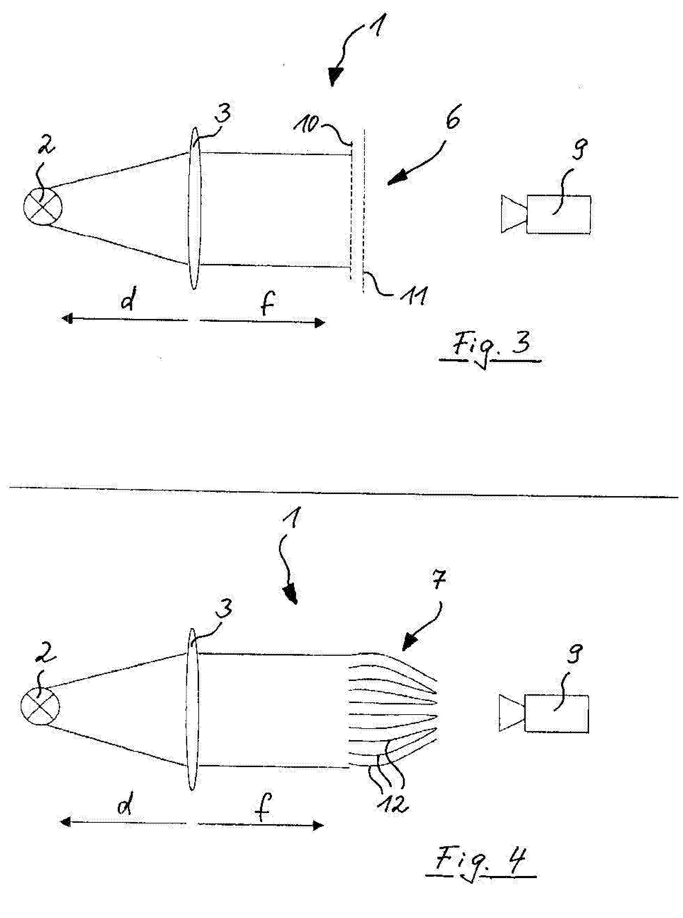

Fig. 4 zeigt eine erfindungsgemäße Messanordnung 1, bei der als Querschnittserfassungseinrichtung eine aus einer Vielzahl von Lichtleitfasern 12 bestehende Faseranordnung 7 verwendet wird. Dabei befinden sich die Eingangsenden der Lichtleitfasern 12 - die in Fig. 4 linken Enden der Lichtleitfasern 12 - in der Erfassungs- bzw. Fourierebene. An den Ausgangsenden der Lichtleitfasern 12 - in Fig. 4 an den rechten Enden der Lichtleitfasern 12 - kann die in der Fourierebene herrschende Lichtstärke mit Hilfe der orts- und spektralauflösenden Kamera 9 detektiert werden. Die Lichtleitfasern 12 bestehen vorzugsweise aus Glas oder Kunststoff. Vorzugsweise wird eine Anzahl im Bereich von 30 x 30 bis 500 x 500 Lichtleitfasern 12 gewählt. Auch Rechteckanordnungen mit 500 x 400 Lichtleitfasern 12 sind denkbar.

Die in Fig. 4 gezeigten Lichtleitfasern 12 können eine beliebige Länge aufweisen und im Übrigen im Rahmen ihrer Flexibilität beliebig gekrümmt werden. Die Ausgangsenden der Lichtleitfasern 12 können dementsprechend an beliebigen Raumpunkten angeordnet werden, so dass die Detektion der Lichtstärke an beliebigen Stellen der Messanordnung 1 erfolgen kann. Dies bietet den Vorteil einer erheblichen Flexibilität bei der konstruktiven Auslegung eines Gehäuses für die Messanordnung 1.

In den Fig. 1 bis 4 ist jeweils eine als Sammeloptik fungierende Sammellinse 3 gezeigt. Alternativ ist denkbar, als Sammeloptik einen Sammelspiegel einzusetzen, so dass die in den Fig. 1 bis 4 gezeigte Anordnung der einzelnen Bestandteile der jeweiligen Messanordnung 1 entlang einer geradlinigen Achse nicht zwingend ist. Die Verwendung eines Sammelspiegels würde es beispielsweise ermöglichen, alle Bestandteile der Messanordnung 1 auf derselben Seite des Sammelspiegels anzuordnen.

Außerdem ist die Anordnung der Kamera 9 und der Sammellinse 3 auf derselben Seite der Querschnittserfassungseinrichtung auch dann möglich, wenn letztere entsprechend angepasst wird. Im Falle einer Mattscheibe könnte hierzu anstatt einer transluzenten eine remittierende Mattscheibe verwendet werden. Im Falle einer Plattenanordnung könnte es sich bei der von der Kamera 9 und Sammellinse 3 abgewandten Platte anstatt um eine Lochplatte um eine ungelochte Reflektionsplatte handeln. Diese sorgt dafür, dass das durch die der Kamera 9 und Sammellinse 3 zugewandten Lochplatte hindurch tretende Licht ggf. mehrfach zwischen den Platten reflektiert wird und wieder durch die Lochplatte austritt. Bei einer Ausführungsform dieser Art würde in Fig. 3 die rechte Lochplatte 11 durch die ungelochte Reflektionsplatte ersetzt und die Kamera 9 unter einem von 90° abweichenden Beobachtungswinkel auf der linken Seite der Plattenanordnung 6 angeordnet werden. Bei dieser Anordnung ist es zur Erzielung geeigneter Beugungseffekte vorteilhaft, die Lochdurchmesser kleiner als bei der Ausführungsform gemäß Fig. 3 zu wählen, nämlich im Bereich von 1 µm bis 100 µm.

### BEZUGSZEICHENLISTE

- 1: Messanordnung
- 2: Lichtquelle
- 3: Sammellinse
- 4: Mattscheibe
- 5: Diodenarray
- 6: Lochplattenanordnung
- 7: Faseranordnung
- 9: Kamera
- 10: Lochplatte
- 11: Lochplatte
- 12: Lichtleitfaser

- f: Brennweite der Sammellinse 3
- d: Abstand der Lichtquelle 2 von der Sammellinse 3

## Patentansprüche

1. Messanordnung zum Messen des Fernfeldes einer Lichtquelle (2), umfassend die zu vermessende Lichtquelle (2), eine Sammeloptik (3) mit einer vorgegebenen Brennweite (f) zum Sammeln des von der Lichtquelle (2) ausgesendeten Lichts, eine Querschnittserfassungseinrichtung (4, 5, 6, 7) zum Erfassen des Querschnitts des von der Sammeloptik (3) gesammelten Lichts in einer Erfassungsebene und eine photosensorische Detektionseinrichtung (5, 9) zum Detektieren des von der Querschnittserfassungseinrichtung (4, 5, 6, 7) erfassten Lichtquerschnitts,
**dadurch gekennzeichnet, dass**
• die Querschnittserfassungseinrichtung (4, 5, 6, 7) mit einem Abstand von der Sammeloptik (3) angeordnet ist, welcher der Brennweite (f) entspricht, und
• die Lichtquelle (2) mit einem Abstand von der Sammeloptik (3) angeordnet ist, welcher der Brennweite (f) entspricht.

2. Messanordnung nach Anspruch 1,
**dadurch gekennzeichnet, dass**
die Querschnittserfassungseinrichtung eine Mattscheibe (4) ist.

3. Messanordnung nach Anspruch 1,
**dadurch gekennzeichnet, dass**
die Querschnittserfassungseinrichtung und die Detektionseinrichtung baueinheitlich von einer Detektoranordnung (5) gebildet werden, mittels welcher der Querschnitt des von der Sammeloptik (3) gesammelten Lichts gleichzeitig erfass- und detektierbar ist.

4. Messanordnung nach Anspruch 3,
**dadurch gekennzeichnet, dass**
die Detektoranordnung eine Diodenanordnung (5) ist.

5. Messanordnung nach Anspruch 1,
**dadurch gekennzeichnet, dass**
die Querschnittserfassungseinrichtung eine Lochplattenanordnung (6) ist, bei der zwei Lochplatten (10, 11) derart voneinander beabstandet angeordnet sind, dass die Materialflächen der einen Lochplatte (10) die gegenüberliegenden Löcher der anderen Lochplatte (11) verdecken, so dass die Detektionseinrichtung (9) auf der von der Sammeloptik (3) abgewandten Seite der Lochplattenanordnung (6) angeordnet werden kann.

6. Messanordnung nach Anspruch 1,
**dadurch gekennzeichnet, dass**
die Querschnittserfassungseinrichtung als Plattenanordnung (6) umfassend eine Lochplatte (10) und eine ungelochte Reflektionsplatte ausgebildet ist, so dass die Detektionseinrichtung (9) auf derselben Seite der Plattenanordnung (6) angeordnet werden kann wie die Sammeloptik (3).

7. Messanordnung nach Anspruch 5 oder 6,
**dadurch gekennzeichnet, dass**
zwischen den Platten (10, 11) ein dielektrisches Medium als Abstandshalter angeordnet ist.

8. Messanordnung nach Anspruch 1,
**dadurch gekennzeichnet, dass**
die Querschnittserfassungseinrichtung eine aus Lichtleitfasern (12) bestehende Faseranordnung (7) ist.

9. Messanordnung nach Anspruch 1,
**dadurch gekennzeichnet, dass**
die Querschnittserfassungseinrichtung aus einer flexiblen Folie oder einem flexiblen Gewebe besteht.

10. Messanordnung nach einem der vorangehenden Ansprüche,
**dadurch gekennzeichnet, dass**
die photosensorische Detektionseinrichtung eine Kamera (9) ist.

11. Messanordnung nach einem der vorangehenden Ansprüche,
**dadurch gekennzeichnet, dass**
die Sammeloptik eine Sammellinse (3) ist.

12. Messanordnung nach Anspruch 11,
**dadurch gekennzeichnet, dass**
die Sammellinse eine Fresnellinse ist.

13. Messanordnung nach einem der Ansprüche 1 bis 10,
**dadurch gekennzeichnet, dass**
die Sammeloptik ein Sammelspiegel ist.

14. Verwendung einer Messanordnung nach einem der vorangehenden Ansprüche zur Messung des Fernfeldes von Flughafenleuchtfeuern.

15. Verwendung nach Anspruch 14,
**dadurch gekennzeichnet, dass**
die Messung stationär nach dem Ausbau des Flughafenleuchtfeuers erfolgt.

16. Verwendung nach Anspruch 14,
**dadurch gekennzeichnet, dass**
die Messung mobil durch Überfahren mehrerer bestimmungsgemäß eingebauter Flughafenleuchtfeuer mit der Messanordnung erfolgt.

17. Verwendung nach Anspruch 16,
**dadurch gekennzeichnet, dass**
das Überfahren der Flughafenleuchtfeuer mit konstanter Geschwindigkeit erfolgt.

18. Verwendung nach Anspruch 16,
**dadurch gekennzeichnet, dass**
die Geschwindigkeit der Messanordnung zur Durchführung der Messung in dem Bereich eines Flughafenleuchtfeuers jeweils reduziert wird.

19. Verfahren zum Messen des Fernfeldes einer Lichtquelle (2), umfassend folgende Schritte:
• Sammeln des von der Lichtquelle (2) ausgesendeten Lichts mittels einer Sammeloptik (3), die eine vorgegebene Brennweite (f) aufweist,
• Erfassen des Querschnitts des von der Sammeloptik (3) gesammelten Lichts in einer Erfassungsebene,
• Detektieren des erfassten Lichtquerschnitts,
**dadurch gekennzeichnet, dass**
• zur Erfassung des Lichtquerschnitts zwischen der Erfassungsebene und der Sammeloptik (3) ein Abstand eingestellt wird, welcher der Brennweite (f) entspricht, und
• zur Messung des Fernfeldes zwischen der Lichtquelle (2) und der Sammeloptik (3) ein Abstand eingestellt wird, welcher der Brennweite (f) entspricht.

20. Verfahren nach Anspruch 19,
**dadurch gekennzeichnet, dass**
das Erfassen durch Abbilden des gesammelten Lichts auf eine Mattscheibe (4) erfolgt.

21. Verfahren nach Anspruch 19,
**dadurch gekennzeichnet, dass**
das Erfassen und das Detektieren gleichzeitig durch Abbilden des gesammelten Lichts auf eine Detektoranordnung (5) erfolgt.

22. Verfahren nach Anspruch 19,
**dadurch gekennzeichnet, dass**
das Erfassen durch Abbilden des gesammelten Lichts auf eine Plattenanordnung (6) umfassend wenigstens zwei Platten (10, 11) erfolgt, wobei wenigstens eine der Platten eine Lochplatte (10) ist.

23. Verfahren nach Anspruch 19,
**dadurch gekennzeichnet, dass**
das Erfassen durch Abbilden des gesammelten Lichts auf eine aus Lichtleitfasern (12) bestehende Faseranordnung (7) erfolgt.

24. Verfahren nach Anspruch 19,
**dadurch gekennzeichnet, dass**
das Erfassen durch Abbilden des gesammelten Lichts auf eine flexible Folie oder ein flexibles Gewebe erfolgt.

25. Verfahren nach einem der Ansprüche 19 bis 24,
**dadurch gekennzeichnet, dass**
die Lichtstärkeverteilung der Lichtquelle (2) quantitativ auf einer Darstellungseinheit dargestellt wird.

26. Verfahren nach Anspruch 25,
**dadurch gekennzeichnet, dass**
simultan zu der quantitativen Lichtstärkeverteilung eine farbmetrische Analyse des Lichtes der Lichtquelle (2) auf der Darstellungseinheit dargestellt wird.
